# EUROPÄISCHE PATENTSCHRIFT

(11) **EP 0 964 066 B1**
(45) Veröffentlichungstag und Bekanntmachung des Hinweises auf die Patenterteilung: **19.03.2003**
(21) Anmeldenummer: 99110765.7
(22) Anmeldetag: 04.06.1999
(51) Int. Cl.: C21C 5/52, C21B 5/00

(54) **Verfahren und Anlage zur Stahlherstellung in einem Elektrostahlofen bestückt mit flüssigem roheisen aus einem minihochofen und weniger schrott**
Process and apparatus for eaf steelmaking using liquid pig iron from a mini blast furnace and less scrap
Procédé et installation pour la fabrication d acier en four électrique à arc avec enfournement de fonte brute liquide d un haut fourneau de petite taille et moins de ferrailles

(30) Priorität: 10.06.1998 DE 19825937; 24.08.1998 DE 19838330
(43) Veröffentlichungstag der Anmeldung: 15.12.1999
(73) Patentinhaber: SMS Demag AG, 40237 Düsseldorf (DE)
(72) Erfinder: Pleschiutschnigg, Fritz-Peter, Prof.Dr.-Ing., 47269 Duisburg (DE)
(74) Vertreter: Valentin, Ekkehard, Dipl.-Ing.

(56) Entgegenhaltungen:
- US-A- 5 286 277
- US-A- 5 602 867
- US-A- 5 634 257
- SHVEDOV V.S. E.A.: "Blast-furnace operation on metallized pellets with complete elimination of oxidised iron-ore materials from burden" STEEL IN THE USSR, Bd. 9, Nr. 9, September 1979 (1979-09), Seiten 435-437, XP002110853
- PATENT ABSTRACTS OF JAPAN vol. 013, no. 560 (M-906), 13. Dezember 1989 (1989-12-13) & JP 01 233005 A (SUMITOMO METAL IND LTD), 18. September 1989 (1989-09-18)
- PATENT ABSTRACTS OF JAPAN vol. 011, no. 039 (M-559), 5. Februar 1987 (1987-02-05) & JP 61 206506 A (ISHIKAWAJIMA HARIMA HEAVY IND CO LTD), 12. September 1986 (1986-09-12)

## Beschreibung

Die Erfindung betrifft ein Verfahren und eine Anlage zur Stahlherstellung in einem Elektrostahlofen.

Es sind mehrere Verfahren zur Erzeugung von Stahl bekannt. Hier haben sich im wesentlichen zwei Verfahrensrouten durchgesetzt, zum einen die Stahlherstellung nach der konventionellen Hochofen-Konverter-Route, zum anderen die im Elektrostahlofen.

Üblicherweise wird der Elektrostahlofen hierbei mit 80-100% Schrott bestückt sowie zu geringeren Teilen mit Eisenschwamm (reduziertes Eisenerz) aus einer Direktreduktionsanlage. Der Elektrostahlofen wird als Einschmelzgefäß verwendet, und die weitere metallurgische Arbeit findet in der Sekundärmetallurgie statt.

Seit etwa 1980 ist es bekannt, Warmband auf Basis von Dünnbrammen mit einem Format zwischen 40-100 mm und max. 1.800 mm Breite im Verbund mit einer Konti-Fertigstraße im Anschluß an ein Elektrostahlwerk herzustellen. Mittels dieser Technologie werden zur Zeit etwa 15% der Warmbanderzeugung von ca. 300 Mio. tpa hergestellt. Hierbei konnten die Kosten zur Erzeugung des Warmbandes auf Basis eines Elektrostahlwerkes im Verbund mit einer Dünnbrammenanlage im Bereich der Investitionskosten als auch der gesamten Fertigungskosten um ca. 50% gesenkt werden. Neben der Weiterverarbeitung zu Bändern und Blechen ist die zu Langprodukten, wie Profile oder Draht, bekannt.

Aus der US 5,286,277 ist ein Verfahren zur Herstellung von Stahl mittels eines Elektrostahlofens bekannt. Dieser Elektrostahlofen wird sowohl mit festen Eisenträgern als auch mit flüssigem Eisen bestückt. Auch ist der Einsatz von Sauerstoff und Injektionskohle beschrieben.

Die US 1,691,401 zeigt ein Anlagenlayout, das einen Hochofen zur Herstellung von Roheisen sowie Gießformen mit einem dazwischen angeordneten Elektroofen aufweist, um die Roheisenschmelze vor dem Vergießen in ihrer Zusammensetzung und Temperatur einstellen zu können.

Bei dem Elektrostahlverfahren ergeben sich vor allem in den letzten Jahren Probleme mit den ansteigenden Rohstoffpreisen für Schrott bzw. mit der geringeren Verfügbarkeit von Schrott. Des weiteren führen Bestandteile im Schrott zu einem Anstieg der Begleitelemente Kupfer (aufgrund verschrotteter Kupferdrähte) sowie von Zink und Zinn, die bekanntermaßen zu Qualitätsnachteilen im Werkstoff Stahl führen. Ferner sind die Produktionszeiten im Elektrostahlofen mit einer Sequenz (tap to tap-Zeiten) von 50-70 Minuten im Verhältnis zur Stranggußanläge zu lang.

Demnach liegt der vorliegenden Erfindung die Aufgabe zugrunde, ein Verfahren und eine Anlage zur Herstellung von Stahl zu schaffen, welche diese Probleme beseitigen.

Diese Aufgabe wird erfindungsgemäß mittels der Merkmale des Verfahrensanspruchs 1 sowie des Anspruchs 7 gelöst. Vorteilhafte Ausgestaltungen der Erfindung sind in den Unteransprüchen offenbart.

Der Erfindung liegt der Gedanke zugrunde, maximal 60% flüssiges Roheisen sowie wahlweise zusätzlich andere Eisenträger in einem Elektrostahlofen einzusetzen, wobei gleichzeitig der Schrottanteil minimiert wird. Das flüssige Roheisen wird in einem Minihochofen unter Einsatz von Eisenpellets und/oder Stückerz und Koks sowie Kohle betrieben. Der Schmelzvorgang im Elekorostahlofen findet unter Einsatz elektrischer Energie sowie gleichzeitigem Einsatz von Sauerstoff und Injektionskohle statt.

Der Minihochofen hat hierbei eine Kapazität von 0,3 bis 1,0 Millionen tpa Roheisen.

Bei Chargierung von 30-50% Roheisen in einem Elektrostahlofen lehnt sich dessen Kapazität an die maximale Kapazität einer bekannten Mini-Mill für Warmband mit 1,5 bis max. 3 Millionen tpa Warmband optimal an. Das heißt, es kommen bei etwa 30-50% Roheisen-Einsatz 0,5-0,7 Millionen tpa Roheisen bei der ersten. Baustufe einer Mini Mill und 0,9-1,5 Millionen tpa Roheisen bei voller Kapazität einer Mini-Mill zum Einsatz.

Der Minihochofen wird zu 60-100% mit Eisenpellets, zu max. 40% mit Stückerz sowie zu max. 400, vorzugsweise 250-200 kg Koks pro Tonne Roheisen über die Gicht beschickt. Der Hochofen zeichnet sich außerdem durch eine Kohle-Einblasvorrichtung in den Windformen aus, über die vorteilhafterweise max. 250 kg Kohle pro Tonne Roheisen eingeblasen wird. Ferner wird Heißluft, die mit max. 10% Sauerstoff angereichert ist, eingeblasen.

Da die Bauhöhe des Minihochofens geringer als die eines konventionellen Hochofens ist, ist die Druckbelastung ebenfalls geringer, und der Koks kann von mittlerer bzw. unterer Qualität sein. Außerdem ist es möglich, den Ofen ohne Sinter, aber großen Mengen an Kohle zu fahren.

Neben flüssigem Roheisen ist der Einsatz weiterer Eisenträger günstig, mit denen der Elektroofen chargiert wird. Es handelt sich vorzugsweise um Direktreduktionsmaterial (Eisenschwamm) sowie festes Roheisen in Form von Masseln. Durch die Zugabe von flüssigem Roheisen und die weitere Variation der Eisenträger ist der Schrottanteil beliebig in Abhängigkeit seines Preises reduzierbar und durch das jeweils vom Preis und den Beschaffungsmöglichkeiten günstigste Material ersetzbar.

Durch Verminderung des Schrottanteils sinkt der Anteil der nachteiligen Begleitelemente Kupfer, Zink und Zinn im Stahl.

Die Verminderung des Schrottanteils und der Einsatz des flüssigen Roheisens im Elektrostahlofen von max. 60% der gesamten aufzuschmelzenden Menge mit der chemischen Energie in Form von 4% Kohlenstoff führen über den Einsatz von Sauerstoff von maximal 65 m³/tStahl und einer Kohleninjektion bei gleichzeitigem Einsatz der Ofenelektroden zu einer stark verkürzten Einschmelzzeit. Folglich kann die sogenannte tapto tap-Zeit, die Zeit zwischen Beschickung und Entleerung des Ofens, auf ein Intervall von 25-45 Minuten von bisher 50-70 Minuten, das bei einem Schrottanteil von 100% notwendig ist, abgesenkt werden.

Das vorgeschlagene Verfahren dient zu Herstellung von Stahl für die Weiterverarbeitung zu Warmband oder Langprodukten, beispielsweise Stangen, Rohre, Profile, Draht. Die oben beschriebene verkürzte Schmelzenfolge im Elektrostahlofen führt unter besonders vorteilhaften Bedingungen zu einer Verdopplung der Stahlwerksleistung, zu einer Steigerung der Energieausnutzung von bisher 50% auf max. 80% sowie zu einer hohen Flexibilität des Stahlwerkes hinsichtlich der Sequenzfolge der Dünnbrammmengieß- und der Walzstraße.

Zusammenfassend lassen sich die Vorteile des erfindungsgemäßen Verfahrens und der Anlage wie folgt beschreiben:
- Steigerung der Produktivität;
- Erhöhung der Energieausnutzung von max. 80% durch eine Verkürzung der tap to tap-Zeit auf mindestens 25 Minuten;
- Erhöhung der Stahlwerksflexibilität;
- Verbesserung der Produktqualität;
- Preisstabilisierung der Produktionskosten durch eine Kontrolle der Rohstoffeinkaufspreise basierend auf der hohen Flexibilität der Rohstoffeinsätze im Elektrostahlofen.

Außerdem erweist es sich als Vorteil, bei einer benötigten Gesamtroheisenerzeugung von max. 1,5 Millionen tpa zwei oder drei Minihochöfen mit einer Standardkapazität von jeweils 0,5 oder 0,7 Millionen tpa anstelle eines konventionellen Hochofens zu bauen, um die Vorteile der Investitionskosten, der Rohstoffkosten, der Sicherstellung von flüssigem Roheisen sowie der Flexibilität des Gesamtsystems zu nutzen.

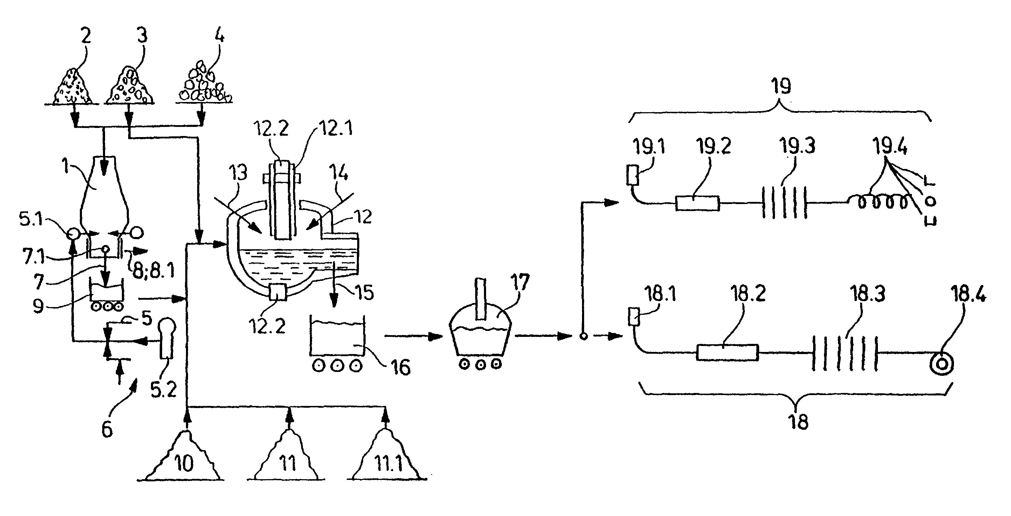

Nachfolgend wird das vorgeschlagene Verfahren und die Anlage schematisch anhand der einzigen Figur beschrieben:

Zur Herstellung des im Elektrostahlofens eingesetzten Roheisens wird ein Minihochofen 1 mit einer Kapazität von 0,3-1,0 Millionen Tonnen Roheisen pro Jahr mit Eisenpellets 2, Stückerz 3 sowie Koks 4 beschickt. Der Hochofen weist eine Kohle-Einblasvorrichtung 6 von einer maximalen Einblasleistung von 250kg/t Roheisen über die Windformen 5.1 auf. Diese Vorrichtung 6 wird neben dem Einsatz von Heißluft 5, die mittels des Winderhitzers 5.2 erzeugt wird, mit max. 10% Sauerstoffzusatz betrieben.

Das im Hochofen 1 erzeugte Roheisen 7 wird mit Hilfe eines Transportsystems 9 in den Elektroofen des Elektrostahlwerks 12 befördert. Mit 8 ist die Schlacke, mit 7.1 sowie 8.1 der Roheisen- bzw. Schlackenabstich bezeichnet. Neben dem Roheisen mit einem max. Anteil von 60% zur gesamten Schmelzmenge wird der Ofen zusätzlich mit Schrott 10 in einer maximalen Menge von 70% und wahlweise mit Direktreduktionsmaterial 11 zu einem Anteil von max. 30% chargiert. Des weiteren ist der Einsatz von Roheisenmasseln 11.1 zu einem Anteil von max. 30% vorgesehen. Die Eisenträger gelangen als Erz zu max. 30% zum Einsatz.

Bei dem Elektrostahlofen kann es sich entweder um einen Wechsel- oder Gleichstromelektrostahlofen handeln. Mit 12.1 sind die Elektroden für einen Wechselstromofen bezeichnet, mit 12.2 die Elektroden für einen Gleichstromofen.

Der Schmelzprozeß wird erreicht über Einblasen von Sauerstoff mittels einer Sauerstoff-Einblasvorrichtung 13 in einer Menge von max. 65 m³/t Stahl, einer Kohleinjektion mittels einer Kohle-Einblasvorrichtung 14 bei gleichzeitigem Einsatz von elektrischem Strom über die Ofenelektroden (12.1 oder 12.2).

Mit 15 ist der Elektroofenabstich bezeichnet. Der Stahl wird in geeigneten Pfannen 16 aufgefangen und einer sekundärmetallurgischen Behandlung 17 unterzogen.

Die so gewonnene und sekundärlegierte Schmelze wird entweder zu Warmband 18 oder Langprodukten 19 weiterverarbeitet. Dies geschieht entweder in einer Dünnbrammengießanlage 18.1 mit einem Temperaturausgleichsofen 18.2 und einer sich anschließenden Konti-Warmwalzanlage 18.3. Das so hergestellt Band wird in einem letzten Schritt aufgecoilt 18.4.

Alternativ kann das Stahlwerk Schmelze liefern für eine Mini Mill für Langprodukte 19, bestehend aus einer Knüppel-Stranggießanlage 19.1, einem Ausgleichsofen 19.2 und einem geeigneten Walzwerk 19.3, die beispielsweise in einer Drahtstraße weiterverarbeitet werden.

### Bezugszeichenliste:

- 1: Minihochofen
- 2: Eisenpellets
- 3: Stückerz
- 4: Koks
- 5: Heizluft mit max. 10%O₂-Anreicherung
- 5.1: Windformen
- 5.2: Winderhitzer
- 6: Kohleeinblasung
- 7: Roheisen
- 7.1: Roheisenabstich
- 8: Schlacke
- 8.1: Schlackenabstich
- 9: Einsatz von Roheisen im Stahlwerk
- 10: Schrott
- 11: Direktreduktionsmaterial
- 11.1: Roheisenmasseln
- 11.2: Erz
- 12: Elektrostahlwerk
- 12.1: Elektroden, Wechselstrom
- 12.2: Elektroden, Gleichstrom
- 13: Sauerstoff-Einlasvorrichtung
- 14: Kohle-Einblasvorrichtung
- 15: Ofenabstich
- 16: Stahltransport
- 17: Sekundärmetallurgie, Pfannenofen und z.B. Vakuumanlage
- 18: Dünnbrammenanlage
- 18.1: Stranggießanlage
- 18.2: Temperaturausgleichsofen
- 18.3: Konti-Warmwalzwerk
- 18.4: Warmband
- 19: Knüppelanlage
- 19.1: Knüppelgießanlage
- 19.2: Ausgleichsofen
- 19.3: Walzwerk für Langprodukte
- 19.4: Verarbeitung der Langprodukte

## Patentansprüche

1. Verfahren zur Herstellung von Stahl, und ggfs. zur weiteren Verarbeitung des Stahls zu Bändern (18.4) und Blechen oder Langprodukten, durch nachfolgenden Ablauf von Schritten in einer Prozeßroute mit einem Hochofen und einem Elektrostahlofen (12) durch
Erzeugung von Roheisen (7) in dem Hochofen;
Transport des flüssigen Roheisens (7) zu dem Elektrostahlofen (12), Bestücken des Elektrostahlofens (12) mit Schrott (10) zu maximal 70% sowie mit flüssigem Roheisen (7) zu maximal 60%, wobei der Schmelzvorgang im Elektrostahlofen (12) betrieben wird unter Einsatz elektrischer Energie und gleichzeitigem Einsatz von Sauerstoff und Injektionskohle,
**dadurch gekennzeichnet,**
**daß** der Hochofen als Mini-Hochofen (1) mit Kapazitäten von 0,3 bis 1,0 Millionen Tonnen Roheisen pro Jahr mit 60 bis 100% Eisenpellets (2), maximal 40% Stückerz (3) sowie maximal 400 kg Koks (4) pro Tonne Roheisen durch Beschickung über die Gicht und mit maximal 250 kg Kohle pro Tonne Roheisen, die über Windformen (5.1) eingeblasen wird, sowie Heißluft, die mit maximal 10% Sauerstoff angereichert ist, betrieben wird, und daß der Elektrostahlofen (12) wahlweise mit weiteren Eisenträgern (11, 11.1) bestückt wird und in den Elektrostahlofen (12) maximal 65 m³ O₂/t Stahl sowie Feinkohle eingebracht werden.

2. Verfahren nach Anspruch 1,
**dadurch gekennzeichnet,**
**daß** die Stahlschmelze mittels einer nachgeschalteten Dünnbrammengießanlage (18.1) sowie einem Konti-Warmwalzwerk (18.3) zu Bändern (18.4) und Blechen verarbeitet wird.

3. Verfahren nach Anspruch 1,
**dadurch gekennzeichnet,**
**daß** die Stahlschmelze mittels einer nachgeschalteten Knüppel-Stranggießanlage (19.1) sowie einem Langproduktwalzwerk (19.3) zu Langprodukten verarbeitet wird.

4. Verfahren nach Anspruch 1,
**dadurch gekennzeichnet,**
**daß** der Elektrostahlofen (12) mit dem weiteren Eisenträger in Form von Direktreduktionsmaterial (11) zu max. 30% bestückt wird.

5. Verfahren nach Anspruch 1 und 4,
**dadurch gekennzeichnet,**
**daß** der Elektrostahlofen mit dem weiteren Eisenträger in Form von festem Roheisen (11.1) zu max. 30% bestückt wird.

6. Verfahren nach den Ansprüchen 4 und 5,
**dadurch gekennzeichnet,**
**dass** die Eisenträger zur Bestückung des Elektrostahlofens teilweise in Form von Erz eingebracht werden.

7. Anlage zur Herstellung von Stahl und ggfs. weiteren Verarbeitung des Stahls zu Bändern (18.4) und Blechen oder Langprodukten,
umfassend einen Hochofen und einen Elektrostahlofen (12), der eine Sauerstofflanze (13) zum Einblasen von Sauerstoff sowie eine Injektionslanze (14) zum Einbringen von Injektionskohle aufweist,
wobei in dem Hochofen Roheisen (7) erzeugt wird, das flüssige Roheisen (7) zu dem Elektrostahlofen (12) transportiert wird, der Elektrostahlofen (12) mit Schrott (10) zu maximal 70% sowie mit flüssigem Roheisen (7) zu maximal 60% bestückt wird, wobei der Schmelzvorgang im Elektrostahlofen (12) betrieben wird unter Einsatz elektrischer Energie und gleichzeitigem Einsatz von Sauerstoff und Injektionskohle zur Durchführung des Verfahrens nach einem der Ansprüche 1 bis 6,
**dadurch gekennzeichnet,**
**dass** es sich bei dem Hochofen um einen Mini-Hochofen (1) mit Kapazitäten von 0,3 bis 1,0 Millionen Tonnen Roheisen pro Jahr handelt,
der mit 60 bis 100% Eisenpellets (2), maximal 40% Stückerz (3) sowie maximal 400 kg Koks (4) pro Tonne Roheisen durch Beschickung über die Gicht betrieben wird,
und der eine Kohle-Einblasvorrichtung in den Windformen (5.1) aufweist, über die maximal 250 kg Kohle pro Tonne Roheisen eingeblasen wird, sowie eine Vorrichtung zum Einblasen von Heißluft, die mit maximal 10% Sauerstoff angereichert ist.

8. Anlage nach Anspruch 7,
**dadurch gekennzeichnet,**
**dass** zur weiteren Verarbeitung des Stahls zu Bändern (18.4) und Blechen oder Langprodukten
eine Station zur sekundärmetallurgischen Behandlung der Stahlschmelze (17),
eine Dünnbrammengießanlage bzw. Knüppelstranggießanlage (18, 19) sowie
ein Walzwerk (18.3, 19.) vorgesehen sind.

9. Anlage nach Anspruch 8,
**dadurch gekennzeichnet,**
**daß** es sich bei dem Elektrostahlofen um einen Wechselstromofen oder um einen Gleichstromofen handelt.

## Claims

1. Method of producing steel and optionally for further processing of the steel into strips (18.4) and sheets or elongate products, by successive devolving of steps in a process route with a blast furnace and an electric steel furnace (12) through production of raw iron (7) in the blast furnace; transport of the liquid raw iron (7) to the electric steel furnace (12), charging of the electric steel furnace (12) with scrap (10) to a maximum of 70% as well as with liquid raw iron (7) to a maximum of 60%, wherein the melt process is operated in the electric steel furnace (12) with use of electrical energy and simultaneous use of oxygen and injection coal, **characterised in that** the blast furnace is operated as a mini blast furnace (1) with capacities of 0.3 to 1.0 million metric tons of raw iron per year with 60 to 100% iron pellets (2), at most 40% of lump ore (3) and at most 400 kg of coke (4) per metric ton of raw iron by charging via the throat and with at most 250 kg of coal per metric ton of raw iron, which is injected by way of blast tuyeres (5.1), as well as hot air enriched with at most 10% of oxygen, and that the electric steel furnace (12) is selectably charged with further iron carriers (11, 11.1), and steel as well as fine coal are introduced into the electric steel furnace (12) to at most 65 m³ O₂/t.

2. Method according to claim 1, **characterised in that** the steel melt is processed by means of a downstream thin slab casting plant (18.1) as well as a continuous hot rolling mill (18.3) into strips (18.4) and sheets.

3. Method according to claim 1, **characterised in that** the steel melt is processed by means of a downstream billet continuous casting plant (19.1) as well as elongate product rolling mill (19.3) into elongate products.

4. Method according to claim 1, **characterised in that** the electric steel furnace (12) is charged with the further iron carriers in the form of direct reduction material (11) to a maximum of 30%.

5. Method according to claims 1 and 4, **characterised in that** the electric steel furnace is charged with further iron carriers in the form of solid raw iron (11.1) to a maximum of 30%.

6. Method according to claims 4 and 5, **characterised in that** the iron carriers for charging of the electric steel furnace are introduced partly in the form of ore.

7. Plant for production of steel and optionally further processing of the steel into strips (18.4) and sheets for elongate products, comprising a blast furnace and an electric steel furnace (12) which comprises an oxygen lance (13) for injection of oxygen as well as an injection lance (14) for introduction of injection coal, wherein raw iron (7) is produced in the blast furnace, the liquid raw iron (7) is transported to the electric steel furnace (12), the electric steel furnace (12) is charged with scrap (10) to a maximum of 70% as well as with liquid raw iron (7) to a maximum of 60%, wherein the smelting process is operated in the electric steel oven (12) with use of electrical energy and simultaneous use of oxygen and injection coal, for performance of the method according to one of claims 1 to 6, **characterised in that** the blast furnace is a mini blast furnace (1) with capacities of 0.3 to 1.0 million metric tons of raw iron per year, which is operated with 60 to 100% of iron pellets (2), at most 40% of lump ore (3) as well as at most 400 kg of coke (4) per metric ton of raw iron by charging by way of the throat and which comprises a coal injection device in the blast tuyere (5.1), by way of which at most 250 kg of coal per ton of raw iron is injected, as well as a device for injection of hot air which is enriched with at most 10% of oxygen.

8. Plant according to claim 7, **characterised in that** for further processing of the steel into strips (18.4) and sheets or elongate products there are provided a station for secondary metallurgical treatment of the steel melt (17), a thin slab casting plant or billet continuous casting plant (18, 19) and a rolling mill (18.3, 19).

9. Plant according to claim 8, **characterised in that** the electric steel furnace is an alternating current furnace or a direct current furnace.

## Revendications

1. Procédé de fabrication d'acier et, le cas échéant, de traitement ultérieur de l'acier en bandes (18.4) et tôles ou produits longs, par le déroulement suivant d'étapes dans une voie de procédé avec un haut-fourneau et un four électrique à acier (12) par
production de fonte brute (7) dans le haut-fourneau
transport de la fonte brute liquide (7) vers le four électrique à acier (12)
alimentation du four électrique à acier (12) en ferrailles (10) à raison d'au maximum 70% ainsi qu'en fonte brute liquide (7) à raison d'au maximum 60%, le processus de fusion étant réalisé dans le four électrique à acier (12) en utilisant de l'énergie électrique et simultanément de l'oxygène et du carbone injecté,
**caractérisé en ce que** le haut-fourneau est alimenté en tant que mini-haut-fourneau (1) avec des capacités de 0,3 à 1,0 million de tonnes par an en fonte brute avec 60 à 100% de pellets de fer (2), au maximum 40% de minerai concassé (3) et au maximum 400 kg de coke (4) par tonne de fonte brute par alimentation via le gueulard et avec au maximum 250 kg de carbone par tonne de fonte brute, qui est insufflé via des tuyères (5.1) ainsi qu'en air chaud qui est enrichi avec au maximum 10% d'oxygène et **en ce que** le four électrique à acier (12) est alimenté au choix avec d'autres supports de fer (11, 11.1) et qu'au maximum 65 m³ O₂/T d'acier ainsi que des fines de carbone sont introduites dans le four électrique à acier (12).

2. Procédé selon la revendication 1, **caractérisé en ce que** la masse fondue d'acier est transformée au moyen d'une installation (18.1) de coulée de brames minces disposée en aval ainsi qu'au moyen d'un train de laminage en continu (18.3) en bandes (18.4) et tôles.

3. Procédé selon la revendication 1, **caractérisé en ce que** la masse fondue d'acier est transformée au moyen d'une installation (19.1) de coulée de billettes disposée en aval ainsi qu'au moyen d'un train de laminage de produits longs (19.3) en produits longs.

4. Procédé selon la revendication 1, **caractérisé en ce que** le four électrique à acier (12) est alimenté en autres supports de fer sous forme d'un matériau (11) de réduction directe à raison d'au maximum 30%.

5. Procédé selon la revendication 1 et 4, **caractérisé en ce que** le four électrique à acier est alimenté en autres supports de fer sous forme de fonte brute solide (11.1) à raison d'au maximum 30%.

6. Procédé selon les revendications 4 et 5, **caractérisé en ce que** les supports de fer sont introduits partiellement sous forme de minerai pour l'alimentation du four électrique à acier.

7. Installation pour la production d'acier et, le cas échéant, la transformation ultérieure de l'acier en bandes (18.4) et tôles ou produits longs, comprenant un haut-fourneau et un four électrique à acier (12), qui présente une lance à oxygène (13) pour insuffler de l'oxygène ainsi qu'une lance à injection (14) pour introduire du carbone d'injection, de la fonte brute (7) étant produite dans le haut-fourneau, la fonte brute liquide (7) étant transportée vers le four électrique à acier (12), le four électrique à acier (12) étant alimenté en ferrailles (10) à raison d'au maximum 70% ainsi qu'en fonte brute liquide (7) à raison d'au maximum 60%, le processus de fonte dans le four électrique à acier (12) étant opéré en utilisant de l'énergie électrique avec une utilisation simultanée d'oxygène et de carbone d'injection pour réaliser le procédé selon l'une quelconque des revendications 1 à 6, **caractérisé en ce qu'**il s'agit pour le haut-fourneau d'un mini-haut-fourneau (1) avec une capacité de 0,3 à 1 million de tonnes par an en fonte brute, qui est opéré par une alimentation via le gueulard de 60 à 100% en pellets de fer (2), d'au maximum 40% en minerai concassé (3) ainsi que d'au maximum 400 kg en coke (4) par tonne de fonte brute et qui présente un dispositif d'insufflation de carbone dans les tuyères (5.1) via lesquelles on insuffle au maximum 250 kg de carbone par tonne de fonte brute, ainsi qu'un dispositif pour insuffler de l'air chaud qui est enrichi avec au maximum 10% d'oxygène.

8. Installation selon la revendication 7, **caractérisée en ce qu'**on a prévu, pour la transformation ultérieure de l'acier en bandes (18.4) et tôles ou produits longs, un poste pour le traitement métallurgique secondaire de la masse fondue d'acier (17), une installation de coulée continue de brames minces ou une installation de coulée continue de billettes (18, 19) ainsi qu'un train de laminage (18.3, 19).

9. Installation selon la revendication 8, **caractérisée en ce qu'**il s'agit pour le four électrique à acier d'un four à courant alternatif ou d'un four à courant continu.
